# EUROPÄISCHE PATENTSCHRIFT

(11) **EP 3 652 798 B1**
(45) Veröffentlichungstag und Bekanntmachung des Hinweises auf die Patenterteilung: **17.03.2021**
(21) Anmeldenummer: 18815614.5
(22) Anmeldetag: 04.12.2018
(51) Int. Cl.: H01M 8/0254, H01M 8/026, H01M 8/04007

(54) **BRENNSTOFFZELLENPLATTE, BIPOLARPLATTE UND BRENNSTOFFZELLENAUFBAU**
FUEL CELL PLATE, BIPOLAR PLATE AND FUEL CELL STRUCTURE
PLAQUE DE PILES À COMBUSTIBLE, PLAQUE BIPOLAIRE ET ENSEMBLE DE PILES À COMBUSTIBLE

(30) Priorität: 19.01.2018 DE 102018200846
(43) Veröffentlichungstag der Anmeldung: 20.05.2020
(73) Patentinhaber: Audi AG, 85045 Ingolstadt (DE); VOLKSWAGEN AKTIENGESELLSCHAFT, 38440 Wolfsburg (DE)
(72) Erfinder: SCHOLZ, Hannes, 38106 Braunschweig (DE); MOLL, Florian, 38550 Isenbüttel (DE)
(86) Internationale Anmeldenummer: PCT/EP2018/083480
(87) Internationale Veröffentlichungsnummer: WO 2019/141426

(56) Entgegenhaltungen:
- EP-A2- 0 978 891
- JP-A- 2000 138 065
- US-A1- 2004 058 218

## Beschreibung

Die Erfindung betrifft eine Brennstoffzellenplatte für einen Brennstoffzellenstapel mit einem mehrere erste Stege aufweisenden ersten Flussfeld auf einer ersten Plattenseite, wobei die ersten Stege zur Ausbildung von sich erstreckenden Kanälen voneinander beabstandet verlaufen und jeweils einen Stegrücken zur Anlage an eine benachbarte Lage des Brennstoffzellenstapels aufweisen, und wobei die Stegrücken mindestens eine Vertiefung aufweisen.

Weiterhin betrifft die Erfindung eine aus Brennstoffzellenplatten gebildete Bipolarplatte und einen Brennstoffzellenaufbau.

Brennstoffzellenplatten werden beispielsweise bei Brennstoffzellen und Brennstoffzellenstapeln verwendet. Mit der Hilfe der Brennstoffzellenplatten werden dabei der Brennstoff oder das Kathodengas an eine Gasdiffusionslage der Brennstoffzelle geleitet, die die jeweiligen Gase diffus an die Elektroden der Membranelektrodenanordnung (MEA) verteilt.

In der DE 10 2007 048 206 A1 wird eine Bipolarplatte beschrieben, die ein metallisches Trägerband umfasst. Durch das Aufbringen von voneinander beabstandeten Metallstreifen werden Kanäle gebildet. Der Metallstreifen kann lokale Vertiefungen unterschiedlicher Dicke aufweisen, so dass ein Druckausgleich zwischen benachbarten Kanälen erzielt werden kann. Nachteilig ist hierbei, dass durch die Ausbildung der lokalen Vertiefungen die Kontaktfläche der Bipolarplatte mit der benachbarten Lage (z.B. der Gasdiffusionslage) verringert wird. Dies verschlechtert die elektrische- und die thermische Leitfähigkeit der Bipolarplatte. Gleichzeitig wird durch den Druckausgleich zwischen den Kanälen der Strömungsverlauf eines durch die Kanäle strömenden Mediums (beispielsweise eines Kathodengases oder eines Anodengases) verändert. Dieses wird nicht nur in die Gasdiffusionslage, sondern auch seitlich in die benachbarten Kanäle geführt.

Die EP 0 978 891 A2 und die DE 10 2005 025 911A1 beschreiben eine Brennstoffzellenanordnung mit einer Brennstoffzellenplatte, die durch Stege voneinander getrennte Kanäle aufweist. Auf den Stegrücken der Stege sind Mikrovertiefungen ausgebildet. Die US 2004/058218 A1 beschreibt ebenfalls eine Brennstoffzellen-anordnung mit einer Brennstoffzellenplatte, welche durch Stege voneinander getrennte Kanäle umfasst, wobei auf den Stegrücken der Stege kapillare Mikrokanäle ausgebildet sind. Die JP 2000 138065 A offenbart eine Separatorplatte, welche Stege und zwischen den Stegen angeordnete Kanäle aufweist, wobei auf dem Stegrücken der Stege eine rhombische Mikrostruktur ausgebildet ist.

Es ist Aufgabe der vorliegenden Erfindung eine Brennstoffzellenplatte, eine Bipolarplatte und einen Brennstoffzellenaufbau dahingehend weiterzuentwickeln, bei der eine möglichst große Kontaktfläche zwischen der Brennstoffzellenplatte und einer dazu benachbarten Gasdiffusionslage ermöglicht wird, bei einem möglichst hohen, für den Transport des Mediums zur Verfügung stehenden Volumen.

Die die Brennstoffzellenplatte betreffende Aufgabe wird durch eine Brennstoffzellenplatte gemäß Anspruch 1 gelöst, wobei die Vertiefung als eine Mikrovertiefung gebildet ist. Vorteilhafte Ausgestaltungen mit zweckmäßigen Weiterbildungen der Erfindung sind in den abhängigen Ansprüchen angegeben. Eine Mikrovertiefung ist dabei definiert als eine Vertiefung mit einer Tiefe im Mikrometerbereich entsprechend der Definition in Anspruch 1. Vorteilhafterweise ist die Mikrovertiefung derart ausgestaltet, um ein durch die Kanäle strömendes Medium zumindest teilweise in die benachbarte Lage zu führen, aber ein Strömen des Mediums zwischen zwei benachbarten Kanälen der Brennstoffzellenplatte zu reduzieren oder zu unterbinden.

Dabei ist erfindungsgemäß vorgesehen, dass das durch die Kanäle strömende Medium zumindest im Bereich der Stege, unter die Stege strömt. Dadurch wird das für den Transport des durchströmenden Mediums zur Verfügung stehende Volumen vergrößert. Gleichzeitig wird aufgrund der geringen Tiefe der Mikrovertiefung ein Druckausgleich zwischen benachbarten Kanälen im Vergleich zum Stand der Technik stark reduziert oder unterbunden. Das durch die Kanäle strömende Medium wird, ähnlich wie bei unstrukturierten Stegen, weiterhin durch die Kanäle in Richtung der Gasdiffusionslage geführt. Dies verbessert die Gleichverteilung des strömenden Mediums und die Wasseraustragfähigkeit innerhalb des Brennstoffzellenstapels. Eine Intrusion der Gasdiffusionslage in die Kanäle beim Verpressen der Gasdiffusionslage mit der Brennstoffzellenplatte und eine damit einhergehende Verringerung des Strömungsquerschnitts wird zudem reduziert oder verhindert.

In einer vorteilhaften Ausgestaltung ist die Brennstoffzellenplatte aus Metall oder aus einem Werkstoff auf Kohlenstoffbasis gebildet.

Im Rahmen der Erfindung ist es insbesondere vorgesehen, dass die Mikrovertiefung eine Tiefe von 1 Mikrometer (µm) bis 800 Mikrometern (µm) aufweist. Vorzugsweise beträgt die Tiefe zwischen 20 Mikrometern und 500 Mikrometern. In einer besonders bevorzugten Ausführungsform beträgt die Tiefe zwischen 20 Mikrometern und 200 Mikrometern.

Um eine Mikrovertiefung in der Brennstoffzellenplatte ausbilden zu können ist es bevorzugt, wenn von der Brennstoffzellenplatte an mindestens einem der Stegrücken Material mittels eines Lasers abgetragen wird. In einer alternativen Ausführungsform ist es vorgesehen, dass das Material durch mechanische Bearbeitung von einem der Stegrücken der Brennstoffzellenplatte abgetragen wird. In einer weiteren alternativen Ausführungsform wird die Brennstoffzellenplatte mit einer speziellen Geometrieausprägung gegossen oder die Mikrovertiefung mit einem Presswerkzeug gepresst.

Im Rahmen der Erfindung ist es möglich, dass die Mikrovertiefung geradlinig oder abgerundet gebildet ist. Eine abgerundete Mikrovertiefung vereinfacht die Herstellung der Brennstoffzellenplatte.

In einer besonders einfach zu fertigenden Ausführungsform verläuft die Mikrovertiefung entlang des Stegrückens senkrecht zu einer Erstreckungsrichtung der Kanäle. In einer alternativen Ausführungsform verläuft die Mikrovertiefung schräg oder diagonal entlang des Stegrückens.

Um eine Intrusion der Gasdiffusionslage in die Kanäle bei einem Verpressen der Brennstoffzellenplatte mit der Gasdiffusionslage noch weiter zu reduzieren und um gleichzeitig das Strömungsverhalten des strömenden Mediums möglichst wenig zu beeinflussen, ist es erfindungsgemäß vorgesehen, dass an mindestens einem der Stegrücken eine Mehrzahl von Mikrovertiefungen ausgebildet ist. Diese sind vorzugsweise in regelmäßigem Abstand zueinander angeordnet. In einer besonders bevorzugten Ausführungsform weist jeder der Stegrücken eine Mehrzahl von Mikrovertiefungen auf.

Um einen Druckausgleich benachbarter Kanäle zu unterbinden und um dennoch eine Intrusion der Gasdiffusionslage in die Kanäle beim Verpressen zu verhindern oder zumindest zu reduzieren, ist es erfindungsgemäß vorgesehen, dass die Mikrovertiefungen getrennt sind durch einen in der Erstreckungsrichtung entlang des Stegrückens verlaufenden Mikrosteg.

Um eine möglichst große Kontaktfläche zwischen der Gasdiffusionslage und der Brennstoffzellenplatte zu ermöglichen bei einem möglichst hohen, für den Transport des Mediums zur Verfügung stehenden Volumen, ist es erfindungsgemäß vorgesehen, dass die Mikrovertiefungen oder ein Teil der Mikrovertiefungen miteinander zu einer Gitterstruktur verbunden sind.

Im Rahmen der Erfindung ist es bevorzugt, dass ein mehrere zweite Stege aufweisendes zweites Flussfeld auf einer der ersten Plattenseite gegenüberliegenden zweiten Plattenseite angeordnet ist. Die zweiten Stege verlaufen voneinander beabstandet zur Ausbildung von sich erstreckenden zweiten Kanälen und weisen jeweils einen zweiten Stegrücken zur Anlage an die benachbarte Lage des Brennstoffzellenstapels auf. An den zweiten Stegrücken kann eine weitere Mikrovertiefung ausgebildet sein. Dies hat den Vorteil, dass bei Einsatz der Brennstoffzellenplatte in einem Brennstoffzellenaufbau sowohl Kanäle für das Kathodengas (z.B. Sauerstoff oder Luft) als auch zweite Kanäle für das Anodengas (z.B. Wasserstoff) bereitgestellt sind. Es ist möglich, dass die Kanäle einer Brennstoffzellenplatte für die Führung von Brennstoff (Brennstoffplatte) eine geringere Kanalbreite aufweisen als die Kanäle einer Brennstoffzellenplatte zur Führung eines Oxidationsmediums oder Kathodengases (Kathodengasplatte). Um eine gleichmäßige Druckverteilung beim Verpressen des Brennstoffzellenstapels herbeizuführen, hat es sich als sinnvoll erwiesen, wenn eine Rückenbreite des Stegrückens der ersten Stege breiter ist als eine Rückenbreite des Stegrückens der zweiten Stege.

Die die Bipolarplatte betreffende Aufgabe wird mit einer Bipolarplatte gemäß Anspruch 5 gelöst. Es umfasst eine erste Brennstoffzellenplatte und eine zweite Brennstoffzellenplatte. Die Bipolarplatte ist deshalb auch als ein System aus zwei Brennstoffzellenplatten zu verstehen. Die erste Brennstoffzellenplatte ist beispielsweise eine Anodenplatte zur Führung des Brennstoffes an die Anode oder an die der Anode zugeordnete Gasdiffusionslage der Brennstoffzelle. Die zweite Brennstoffzellenplatte ist beispielsweise eine Kathodenplatte zur Führung des Kathodengases an die Kathode bzw. an die ihr zugeordnete Gasdiffusionslage. Bei der erfindungsgemäßen Bipolarplatte ist das zweite Flussfeld der ersten Brennstoffzellenplatte auf das zweite Flussfeld der zweiten Brennstoffzellenplatte aufgebracht zur Ausbildung eines aus den beiden Flussfeldern gebildeten Kühlmittelflussfelds. In anderen Worten: Die zweiten Stegrücken der ersten Brennstoffzellenplatte sind auf den zweiten Stegrücken der zweiten Brennstoffzellenplatte aufgebracht. Mit der Bipolarplatte ist also der Vorteil verbunden, dass nicht nur der Brennstoff an die Anode oder das Kathodengas an die Kathode geführt werden können, sondern dass auch ein Kühlmittel durch das zwischen den beiden Brennstoffzellenplatten verlaufende Kühlmittelflussfeld bereitgestellt werden kann, um Prozesswärme abzuführen. In einer alternativen Ausführungsform kann auch das erste Flussfeld der ersten Brennstoffzellenplatte auf das zweite Flussfeld der zweiten Brennstoffzellenplatte, oder das erste Flussfeld der ersten Brennstoffzellenplatte auf das erste Flussfeld der zweiten Brennstoffzellenplatte aufgebracht sein. Alternativ kann die Bipolarplatte auch derart ausgestaltet sein, dass kein Kühlmedium durch sie strömt. Somit können -je nach Anforderung - in einem Brennstoffzellenstapel Bipolarplatten mit einer Kühlmittelführung und Bipolarplatten ohne eine Kühlmittelführung vorhanden sein.

Die den Brennstoffzellenaufbau betreffende Aufgabe wird mit einem Brennstoffzellenaufbau gemäß Anspruch 6 gelöst. Er umfasst eine Membranelektrodenanordnung, an der eine Brennstoffzellenplatte mit ihren Stegrücken anliegt. Dadurch ist ein Brennstoffzellenaufbau geschaffen, der nach dem Verpressvorgang des Brennstoffzellenstapels eine hohe thermische und elektrische Leitfähigkeit bereitstellt.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine Draufsicht eines Ausschnitts einer Brennstoffzellenplatte in einer ersten nicht von der Erfindung erfassten Ausführungsform,
- Fig. 2: einen Schnitt II-II der Figur 1,
- Fig. 3: einen Schnitt III-III der Figur 1,
- Fig. 4: einen Schnitt IV-IV der Figur 1,
- Fig. 5: eine schematische Darstellung eines Ausschnitts des Stegrückens in einer zweiten nicht von der Erfindung erfassten Ausführungsform,
- Fig. 6: eine schematische Darstellung eines Ausschnitts des Stegrückens in einer dritten nicht von der Erfindung erfassten Ausführungsform,
- Fig. 7: eine schematische Darstellung eines Ausschnitts des Stegrückens in einer vierten nicht von der Erfindung erfassten Ausführungsform,
- Fig. 8: eine schematische Darstellung eines Ausschnitts des Stegrückens in einer fünften nicht von der Erfindung erfassten Ausführungsform,
- Fig. 9: eine schematische Darstellung eines Ausschnitts des Stegrückens in einer sechsten Ausführungsform,
- Fig. 10: eine schematische Darstellung eines Ausschnitts des Stegrückens in einer siebten Ausführungsform,
- Fig. 11: eine schematische Darstellung eines Ausschnitts des Stegrückens in einer achten nicht von der Erfindung erfassten Ausführungsform,
- Fig. 12: eine schematische Darstellung eines Ausschnitts des Stegrückens in einer neunten nicht von der Erfindung erfassten Ausführungsform,
- Fig. 13: eine schematische Darstellung eines Ausschnitts des Stegrückens in einer zehnten nicht von der Erfindung erfassten Ausführungsform,
- Fig. 14: eine schematische Darstellung eines Ausschnitts des Stegrückens in einer elften nicht von der Erfindung erfassten Ausführungsform, und
- Fig. 15: eine Schnittansicht eines Ausschnitts eines verpressten Brennstoffzellenstapels mit einem mehrere Brennstoffzellenplatten umfassenden Plattensystem.

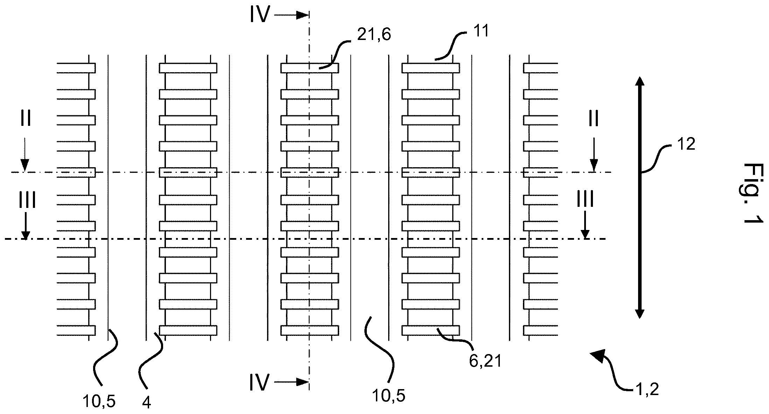

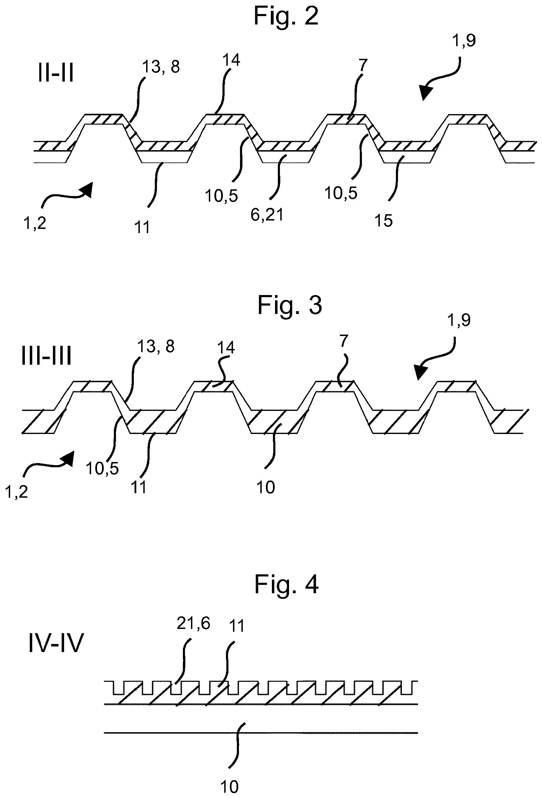

Figur 1 zeigt eine Draufsicht einer ersten nicht von der Erfindung erfassten Ausführungsform einer Brennstoffzellenplatte 1 für einen Brennstoffzellenstapel 3. Auf einer ersten Plattenseite 2 ist ein mehrere erste Stege 4 aufweisendes erstes Flussfeld 5 ausgebildet. Die ersten Stege 4 sind zur Ausbildung von sich erstreckenden Kanälen 10 voneinander beabstandet angeordnet und weisen jeweils einen Stegrücken 11 zur Anlage an eine benachbarte Lage des Brennstoffzellenstapels 3 auf. Die Stegrücken 11 umfassen eine Mehrzahl von als Mikrovertiefungen 6 gebildeten Vertiefungen 21 (siehe Figur 4). Diese weisen bevorzugt eine Tiefe im Bereich zwischen 100 Mikrometern und 800 Mikrometern auf. Im vorliegenden nicht von der Erfindung erfassten Ausführungsbeispiel sind die Mikrovertiefungen 6 geradlinig gebildet und verlaufen entlang des Stegrückens 11 senkrecht zu einer Erstreckungsrichtung 12 der Kanäle 10. Durch die Ausbildung der Vertiefungen 21 als Mikrovertiefungen 6 wird ein Druckausgleich zwischen benachbarten Kanälen 10 stark reduziert und ein durch die Kanäle 10 strömendes Medium zu einer nicht gezeigten benachbarten Lage (z.B. einer Gasdiffusionslage) geführt.

Figur 2 zeigt, dass auf einer der ersten Plattenseite 2 gegenüberliegenden zweiten Plattenseite 9 ein mehrere zweite Stege 7 aufweisendes zweites Flussfeld 8 angeordnet ist. Die zweiten Stege 7 sind voneinander beabstandet angeordnet zur Ausbildung von sich in der Erstreckungsrichtung 12 erstreckenden zweiten Kanälen 13. Die zweiten Stege 7 weisen jeweils einen zweiten Stegrücken 14 auf zur Anlage an die nicht dargestellte benachbarte Lage des Brennstoffzellenstapels 3. In der vorliegender nicht von der Erfindung erfassten Ausführungsform sind an den zweiten Stegrücken keine Vertiefung 21 und auch keine Mikrovertiefung 6 gebildet. In einer alternativen nicht von der Erfindung erfassten Ausführungsform kann auch an den zweiten Stegrücken 14 eine oder eine Mehrzahl von Vertiefungen 21 oder Mikrovertiefungen 6 gebildet sein.

Figur 2 zeigt außerdem, dass sich durch die Vertiefungen 21 Hohlräume 15 unterhalb der Stege, also an der der benachbarten Lage des Brennstoffzellenstapels 3 zugewandten Seite bilden. Dadurch wird das für den Transport des Oxidationsmediums und/oder des Brennstoffs zur Verfügung stehende Volumen vergrößert.

Figur 3 zeigt einen weiteren Schnitt der Figur 1 in einem Bereich, in dem in den Stegrücken 11, 14 keine Mikrovertiefungen 6 ausgebildet sind. In diesem Bereich kontaktiert die Brennstoffzellenplatte 1 mit der benachbarten Lage des Brennstoffzellenstapels 3. Dadurch wird die Leitung des elektrischen Stroms und eine thermische Leitung zur Abführung von Wärme zwischen den benachbarten Lagen des Brennstoffzellenstapels 3 und der Brennstoffzellenplatte 1 begünstigt.

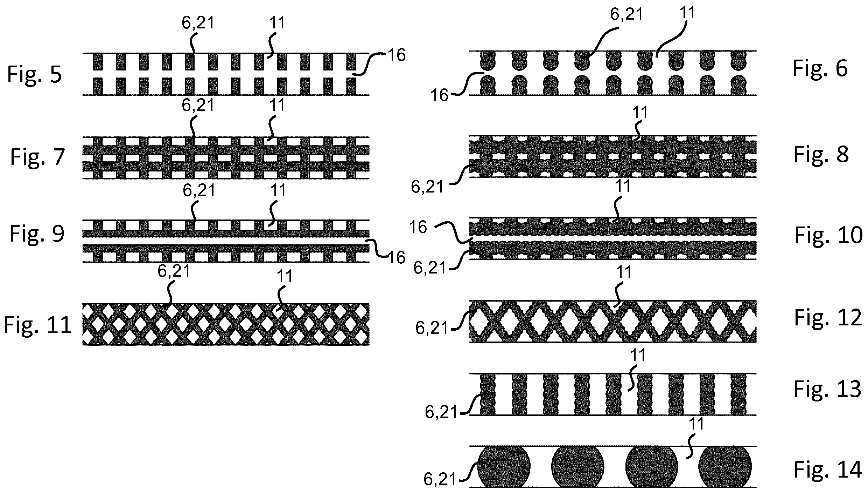

Die Figuren 5 bis 14 zeigen jeweils eine schematische Darstellung eines Ausschnitts des Stegrückens 11 mit verschiedenen Anordnungen und Ausbildungen der Vertiefungen 21. Die Vertiefungen 21 sind dabei als Mikrovertiefungen 6 gebildet. Sie alle können anstelle der Mikrovertiefungen mit Makrovertiefungen gebildet sein.

Figur 5 zeigt exemplarisch einen Stegrücken 11 mit einer Mehrzahl von Mikrovertiefungen 6. Die Mikrovertiefungen 6 sind durch einen in der Erstreckungsrichtung 12 entlang des Stegrückens 11 verlaufenden Mikrosteg 16 getrennt. Sie sind geradlinig ausgebildet und in einem regelmäßigem Abstand zueinander angeordnet. Durch die Ausbildung des Mikrostegs 16 wird ein Druckausgleich benachbarter Kanäle 10 verhindert.

Figur 6 zeigt eine dritte nicht von der Erfindung erfasste Ausführungsform des Stegrückens 11. Dieser unterscheidet sich dadurch, dass die Mikrovertiefungen 6 abgerundet gebildet sind oder mit Rundungen versehen sind. Dadurch wird die Herstellung der Mikrovertiefungen 6 vereinfacht.

In der in Figur 7 dargestellten vierten nicht von der Erfindung erfassten Ausführungsform und in der in Figur 8 dargestellten fünften nicht von der Erfindung erfassten Ausführungsform sind die geradlinig gebildeten Mikrovertiefungen 6 und die abgerundet gebildeten Mikrovertiefungen 6 gitterförmig miteinander verbunden. Dies ermöglicht eine weitere Vergrößerung des für den Transport des Oxidationsmediums und des Brennstoffs zur Verfügung stehenden Volumens.

Die in Figur 9 dargestellte sechste Ausführungsform und die in Figur 10 dargestellte siebte Ausführungsform weisen jeweils einen in der Erstreckungsrichtung 12 entlang des Stegrückens 11 verlaufenden Mikrosteg 16 auf, der die Mikrovertiefungen 6 voneinander trennt. Darüber hinaus sind ein Teil der Mikrovertiefungen 6 miteinander zu einem Gitter verbunden.

Auch bei diesen beiden Ausführungsformen wird ein Druckausgleich zwischen benachbarten Kanälen 10 aufgrund der Ausbildung des Mikrostegs 16 verhindert.

Die in Figur 11 dargestellte achte nicht von der Erfindung erfasste Ausführungsform und die in Figur 12 dargestellte neunte nicht von der Erfindung erfasste Ausführungsform zeigen schräg verlaufende Mikrovertiefungen 6, die zu einer rautenförmigen Gitterstruktur miteinander verbunden sind.

Figur 13 zeigt den Stegrücken 11 in einer zehnten nicht von der Erfindung erfassten Ausführungsform. Die Mikrovertiefungen 6 sind abgerundet gebildet und verlaufen entlang des Stegrückens 11 senkrecht zu der Erstreckungsrichtung 12 der Kanäle 10. Die Mikrovertiefungen 6 der in Figur 14 dargestellten elften nicht von der Erfindung erfassten Ausführungsform weisen einen annähernd kreisförmigen Querschnitt auf. Dadurch wird das für den Transport des Oxidationsmediums und des Brennstoffs zur Verfügung stehende Volumen weiter vergrößert.

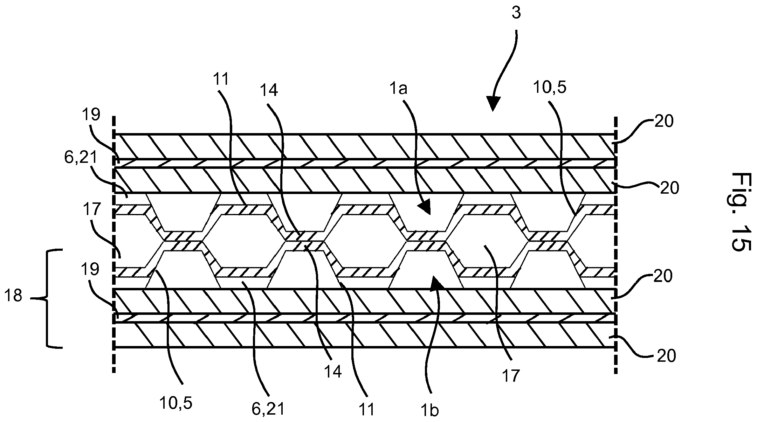

In Figur 15 ist eine Schnittansicht eines Ausschnitts eines verpressten Brennstoffzellenstapels 3 gezeigt mit zwei Brennstoffzellenaufbauten 18, zwischen denen eine zwei Brennstoffzellenplatten 1 umfassende Bipolarplatte angeordnet ist. Jeder Brennstoffzellenaufbau 18 umfasst eine Membranelektrodenanordnung 19 mit einer protonenleitfähigen Membran, der auf einer ersten Seite eine Elektrode zugeordnet ist. Der Elektrode ist eine Gasdiffusionslage 20 zugeordnet, an die eine mit ihren Stegrücken 11 angrenzende Brennstoffzellenplatte 1 angeordnet ist. An der der ersten Seite gegenüberliegenden zweiten Seite der Membran ist eine weitere Elektrode und eine weitere Gasdiffusionslage 20 angeordnet. Die Membranelektrodenanordnung 19 ist ausgestaltet, die elektrochemische Reaktion der Brennstoffzelle auszuführen. Dabei wird ein Brennstoff (z.B. Wasserstoff) an die die Anode bildende Elektrode geführt, wo er katalytisch unter Abgabe von Elektronen zu Protonen oxidiert wird. Diese Protonen werden durch die protonenleitfähige Membran (oder lonen-Austausch-Membran) zur Kathode transportiert. Die aus der Brennstoffzelle abgeleiteten Elektronen fließen über einen elektrischen Verbraucher, vorzugsweise über einen Elektromotor zum Antrieb eines Fahrzeugs, oder zu einer Batterie. Anschließend werden die Elektronen zur Kathode geleitet oder Elektronen an dieser bereitgestellt. An der Kathode wird das Oxidationsmedium (z.B. Sauerstoff oder Sauerstoff enthaltende Luft) durch die Aufnahme der Elektronen zu Anionen reduziert, die unmittelbar mit den Protonen zu Wasser reagieren.

Die Bipolarplatte umfasst eine als Anodenplatte gebildete erste Brennstoffzellenplatte 1a und eine als Kathodenplatte gebildete zweite Brennstoffzellenplatte 1b, wobei das zweite Flussfeld 8 der ersten Brennstoffzellenplatte 1a auf das zweite Flussfeld 8 der zweiten Brennstoffzellenplatte 1b aufgebracht ist. Die zweiten Stegrücken 14 der ersten Brennstoffzellenplatte 1a sind also auf den zweiten Stegrücken 14 der zweiten Brennstoffzellenplatte 1b angeordnet. Dadurch wird ein aus den beiden Flussfeldern 8 gebildetes Kühlmittelflussfeld 17 gebildet, um Prozesswärme abzuführen. Die erste Brennstoffzellenplatte 1a liegt an ihren der zweiten Brennstoffzellenplatte 1b abgewandten Stegrücken 11 an einer der Gasdiffusionslagen 20 an, welche benachbart zu der Membranelektrodenanordnung 19 angeordnet ist. Die zweite Brennstoffzellenplatte 1b liegt an ihren der ersten Brennstoffzellenplatte 1a abgewandten Stegrücken 11 an einer weiteren Gasdiffusionslage 20 an. Diese ist wiederum benachbart zu einer weiteren Membranelektrodenanordnung 19 angeordnet. An den Stegrücken 11 sind eine Mehrzahl von als Mikrovertiefungen 6 gebildete Vertiefungen 21 ausgebildet.

Beim Verpressen der Brennstoffzellenplatte 1 mit der Gasdiffusionslage 20 wird eine verstärkte Intrusion der Gasdiffusionslage 20 in die Kanäle 10 durch die Mikrovertiefungen 6 verhindert. Gleichzeitig wird aufgrund der geringen Tiefe der Mikrovertiefungen 6 ein Druckausgleich zwischen benachbarten Kanälen 10 stark reduziert oder verhindert, so dass die Strömung des Oxidationsmediums und des Brennstoffs durch die Kanäle 10 in die Gasdiffusionslage 20 geführt wird. Die Gasdiffusionslage 10 verteilt das Oxidationsmedium und den Brennstoff diffus an die Elektroden der Membranelektrodenanordnung 19.

In den Bereichen der Stegrücken 11, in denen die Mikrovertiefungen 6 nicht ausgebildet sind, die also mit der Gasdiffusionslage 20 kontaktieren, kann elektrischer Strom und Abwärme von der Gasdiffusionslage 20 in die Brennstoffzellenplatten 1 geleitet werden.

Bei einer in den Figuren nicht gezeigten Brennstoffzellenplatte 1 sind die Vertiefungen 21 als Makrovertiefungen mit einer Tiefe von mehr als 800 Mikrometern (µm) gebildet. Dies begünstigt wiederum einen Druckausgleich zwischen benachbarten Kanälen 10 und vergrößert das für einen Transport des Mediums zwischen der Brennstoffzellenplatte 1 und der benachbarten Lage zur Verfügung stehende Volumen.

### BEZUGSZEICHENLISTE:

- 1: Brennstoffzellenplatte
- 1a: erste Brennstoffzellenplatte
- 1b: zweite Brennstoffzellenplatte
- 2: erste Plattenseite
- 3: Brennstoffzellenstapel
- 4: erster Steg
- 5: erstes Flussfeld
- 6: Mikrovertiefung
- 7: zweiter Steg
- 8: zweites Flussfeld
- 9: zweite Plattenseite
- 10: Kanal
- 11: Stegrücken
- 12: Erstreckungsrichtung
- 13: zweiter Kanal
- 14: zweiter Stegrücken
- 15: Hohlraum
- 16: Mikrosteg
- 17: Kühlmittelflussfeld
- 18: Brennstoffzellenaufbau
- 19: Membranelektrodenanordnung
- 20: Gasdiffusionslage
- 21: Vertiefung

## Patentansprüche

1. Brennstoffzellenplatte (1) für einen Brennstoffzellenstapel (3) mit einem mehrere erste Stege (4) aufweisenden ersten Flussfeld (5) auf einer ersten Plattenseite (2), wobei die ersten Stege (4) zur Ausbildung von sich in einer Erstreckungsrichtung (12) erstreckenden Kanälen (10) voneinander beabstandet verlaufen und jeweils einen Stegrücken (11) zur Anlage an eine benachbarte Lage des Brennstoffzellenstapels (3) aufweisen, wobei die Stegrücken (11) eine Mehrzahl von als Mikrovertiefung (6) gebildete Vertiefungen (21) mit einer Tiefe von zwischen 1 Mikrometer und 800 Mikrometer aufweisen, und wobei die Mikrovertiefungen (6) so ausgeformt sind, dass durch die Kanäle (10) strömendes Medium in die Mikrovertiefungen (6) einströmen kann, **dadurch gekennzeichnet, dass** die Mikrovertiefungen (6) oder ein Teil der Mikrovertiefungen (6) zu einer Gitterstruktur verbunden sind, und dass die Mikrovertiefungen (6) durch einen sich in der Erstreckungsrichtung (12) entlang des Stegrückens (11) verlaufenden Mikrosteg (16) voneinander getrennt sind.

2. Brennstoffzellenplatte (1) nach Anspruch 1, **dadurch gekennzeichnet, dass** die Mikrovertiefungen (6) geradlinig gebildet sind.

3. Brennstoffzellenplatte (1) nach Anspruch 1, **dadurch gekennzeichnet, dass** die Mikrovertiefungen (6) abgerundet gebildet sind.

4. Brennstoffzellenplatte (1) nach einem der Ansprüche 1 bis 3, **dadurch gekennzeichnet, dass** ein mehrere zweite Stege (7) aufweisendes zweites Flussfeld (8) auf einer der ersten Plattenseite (2) gegenüberliegenden zweiten Plattenseite (9) angeordnet ist, und dass die zweiten Stege (7) zur Ausbildung von sich erstreckenden zweiten Kanälen (13) voneinander beabstandet verlaufen und jeweils einen zweiten Stegrücken (14) zur Anlage an die benachbarte Lage des Brennstoffzellenstapels (3) aufweisen.

5. Bipolarplatte mit einer ersten Brennstoffzellenplatte (1a) und einer zweiten Brennstoffzellenplatte (1b) nach Anspruch 4, **dadurch gekennzeichnet, dass** das zweite Flussfeld (8) der ersten Brennstoffzellenplatte (1a) auf das zweite Flussfeld (8) der zweiten Brennstoffzellenplatte (1b) aufgebracht ist zur Ausbildung eines aus den beiden Flussfeldern (8) gebildeten Kühlmittelflussfelds (17).

6. Brennstoffzellenaufbau (18) mit einer Membranelektrodenanordnung (19) und einer an dieser mit ihren Stegrücken (11) anliegenden Brennstoffzellenplatte (1) nach einem der Ansprüche 1 bis 4.

## Claims

1. Fuel cell plate (1) for a fuel cell stack (3) with a first flux field (5) having a plurality of first webs (4) on a first plate side (2), wherein the first webs (4) are spaced apart from one another to form channels (10) extending in an extension direction (12) and each have a web spine (11) for bearing on an adjacent position of the fuel cell stack (3), wherein the web spines (11) have a plurality of recesses (21) formed as micro-recesses (6) with a depth between 1 micrometre and 800 micrometres, and wherein the micro-recesses (6) are formed so that medium flowing through the channels (10) can flow into the micro-recesses (6), **characterised in that** the micro-recesses (6) or a portion of the micro-recesses (6) are joined to form a grid structure, and **in that** the micro-recesses (6) are separated from one another by a micro-web (16) running in extension direction (12) along the web spine (11).

2. Fuel cell plate (1) according to claim 1, **characterised in that** the micro-recesses (6) are configured to be linear.

3. Fuel cell plate (1) according to claim 1, **characterised in that** the micro-recesses (6) are configured to be rounded.

4. Fuel cell plate (1) according to any of claims 1 to 3, **characterised in that** a second flux field (8) having a plurality of second webs (7) is arranged on a second plate side (9) opposite the first plate side (2), and **in that** the second webs (7) are spaced apart from one another to form second channels (13) extending away from one another and each have a second web spine (14) for bearing on the adjacent position of the fuel cell stack (3).

5. Bipolar plate with a first fuel cell plate (1a) and a second fuel cell plate (1b) according to claim 4, **characterised in that** the second flux field (8) of the first fuel cell plate (1a) is applied to the second flux field (8) of the second fuel cell plate (1b) to form a coolant flux field (17) formed by the two flux fields (8).

6. Fuel cell structure (18) with a membrane electrode arrangement (19) and a fuel cell plate (1) bearing on the latter with its web spines (11) according to any of claims 1 to 4.

## Revendications

1. Plaque de pile à combustible (1) pour un empilement de piles à combustible (3) avec un premier champ d'écoulement (5) présentant plusieurs premières barrettes (4) sur une première face de plaque (2), selon laquelle les premières barrettes (4) sont disposées distantes les unes des autres pour former des canaux (10) s'étendant dans une direction d'extension (12) et présentent respectivement un dos de barrettes (11) en vue d'être disposées sur une couche adjacente de l'empilement de piles à combustible (3), selon laquelle les dos de barrettes (11) présentent une pluralité d'évidements (21) sous la forme d'un micro-évidement (6) d'une profondeur comprise entre 1 micron et 800 microns, et selon laquelle les micro-évidements (6) sont formés de façon qu'un fluide s'écoulant à travers les canaux (10) puisse s'écouler dans les micro-évidements (6), **caractérisée en ce que** les micro-évidements (6) ou une partie des micro-évidements (6) sont reliés à une structure en treillis, et **en ce que** les micro-évidements (6) sont séparés les uns des autres par une microbarrette (16) disposée dans la direction d'extension (12) le long du dos de barrettes (11).

2. Plaque de pile à combustible (1) selon la revendication 1, **caractérisée en ce que** les micro-évidements (6) sont formés suivant une ligne droite.

3. Plaque de pile à combustible (1) selon la revendication 1, **caractérisée en ce que** les micro-évidements (6) présentent une forme arrondie.

4. Plaque de pile à combustible (1) selon l'une quelconque des revendications 1 à 3, **caractérisée en ce qu'**un second champ d'écoulement (8) présentant plusieurs secondes barrettes (7) est disposé sur une seconde face de plaque (9) opposée à la première face de plaque (2), et **en ce que** les secondes barrettes (7) sont disposées distantes les unes des autres pour former des seconds canaux (13) s'étendant, et présentent respectivement un second dos de barrettes (14) en vue d'être disposées sur la couche adjacente de l'empilement de piles à combustible (3).

5. Plaque bipolaire avec une première plaque de pile à combustible (1a) et une seconde plaque de pile à combustible (1b) selon la revendication 4, **caractérisée en ce que** le second champ d'écoulement (8) de la première plaque de pile à combustible (1a) est répandu sur le second champ d'écoulement (8) de la seconde plaque de pile à combustible (1b) pour former un champ d'agent réfrigérant (17) formé à partir des deux champs d'écoulement (8).

6. Structure de pile à combustible (18) avec un ensemble d'électrodes à membrane (19) et une plaque de pile à combustible (1) appliquée contre celui-ci avec ses dos de barrettes (11) selon l'une quelconque des revendications 1 à 4.
